# EUROPEAN PATENT SPECIFICATION

(11) **EP 2 077 498 B1**
(45) Date of publication and mention of the grant of the patent: **06.07.2011**
(21) Application number: 09157021.8
(22) Date of filing: 25.02.2004
(51) Int. Cl.: G06F 9/50

(54) **Memory management system and method for a mobile device**
System und Verfahren zur Speicherverwaltung eines mobilen Endgerätes
Système et procédé de gestion de mémoire d'un dispositif mobile

(43) Date of publication of application: 08.07.2009
(62) Divisional of application: 04004270.7
(73) Proprietor: RESEARCH IN MOTION LIMITED, Waterloo, Ontario N2L 3W8 (CA)
(72) Inventor: Ashtana, Atul, Unionville Ontario L3R 2Y1 (CA)
(74) Representative: MERH-IP Matias Erny Reichl Hoffmann

(56) References cited:
- WO-A-2004/010306
- US-A- 5 604 900
- "RAM Charger 8 For Macintosh" [Online] 15 July 1998 (1998-07-15), JUMP DEVELOPMENT GROUP , XP002286542 Retrieved from the Internet: URL:http://web.archive.org/web/19980715172 221/http://jumpdev.com/rc8/tech/Tech0002.h tml> [retrieved on 2004-06-29] * page 1 - page 2 *
- T. FAUCOUNAU: "Memory Use Under MacOS Classic" [Online] 28 March 2003 (2003-03-28), AINACO , XP002286543 Retrieved from the Internet: URL:http://web.archive.org/web/20020328022 008/http://www.ainaco.com/idl/idl_library/ mac_memory_1.html> [retrieved on 2004-06-29] * page 1 *

## Description

### FIELD

The technology described in this patent document relates generally to the fields of memory allocation and management. More particularly, the patent document describes a memory management system and method that is particularly well-suited for use in a mobile device.

### BACKGROUND AND SUMMARY

In a typical mobile device, there are an increasing number of competing software applications, each with different memory requirements, caching policies and memory management requirements. Such mobile devices may include cellular telephones, two-way paging devices, personal digital assistants, and/or other devices having similar memory constraints.

WO 2004/010306 Al discloses systems and methods for managing memory space in a mobile device.

Jump Development Group "RAM Charger 8 for Macintosh", 15. July 1998 describes a RAM charger for Macintosh computers.

T.Faucounau "Memory Use Under MacOS Classic", 28. March 2003 is a question and answer exchange on the way the RAM is allocated in a Macintosh computer.

US5604900 describes a dynamic file expansion method.

In accordance with the teachings described herein, systems and methods are provided for managing memory on a mobile device. A maximum amount of available data storage memory may be allocated for storing data for each of a plurality of software applications loaded on the mobile device. If additional memory is needed for an executing software application, then one of the plurality of software applications may be selected for memory clean-up. Data may then be deleted from the data storage memory allocated to the selected software application in accordance with a pre-established memory retention policy for the selected software application.

### BRIEF DESCRIPTION OF THE DRAWINGS

Fig. 1 is a block diagram of an example memory management system for a mobile device;
Fig. 2 illustrates an example memory allocation and retention table for use with the memory management system of Fig. 1;
Fig. 3 is a flow diagram illustrating an example memory management method for a mobile device; and
Fig. 4 is a block diagram of an example mobile device.

### DETAILED DESCRIPTION

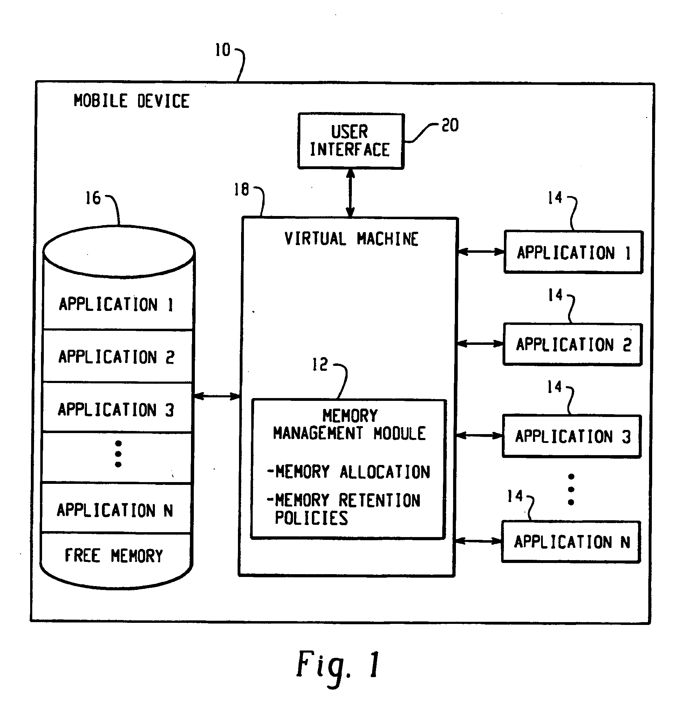

With reference now to the drawing figures, Fig. 1 is a block diagram of an example memory management system for a mobile device 10. The system includes a memory management module 12, a plurality of software applications 14, and a data storage location 16. Also illustrated are a virtual machine 18 and a user interface 20.

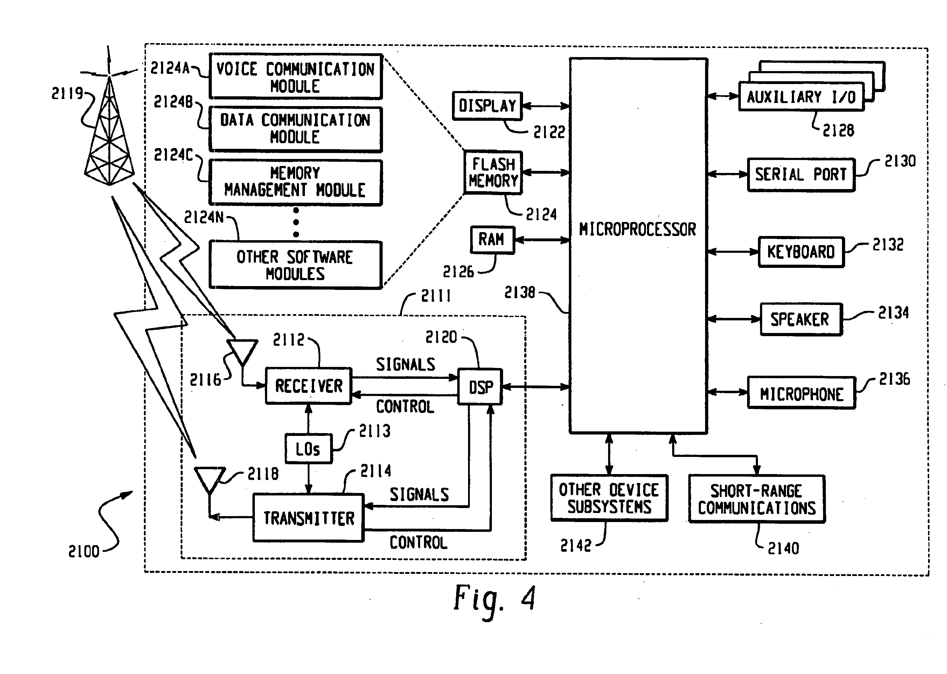

The memory management module 12 may be a software application stored in a memory location and executed by the virtual machine 18 to perform memory allocation and retention functions, as described below. The memory management module 12 may, for example, be a JAVA® application that operates on a JAVA® virtual machine 18 installed on the mobile device 10. The software applications 14 may also be JAVA® applications that are stored in a memory location and executed by the virtual machine 18. It should be understood, however, that the memory management module 12 and software applications 14 may be executed using operating systems other than a JAVA®) virtual machine 18. The software applications 14 may include an electronic messaging application, a calendar application, an address book application, an Internet browser application, a game application(s), and/or other software. The data storage location 16 may be a writable storage medium, such as a FLASH memory (see, e.g., Fig. 4), for storing application data. The software code for the memory management module 12 and software applications 14 may also be stored in the data storage location 16.

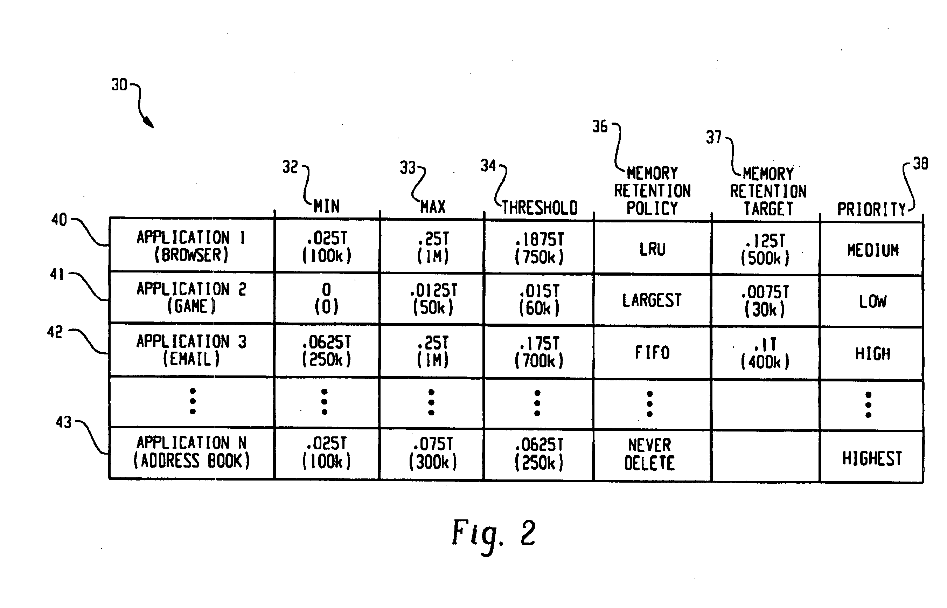

In operation, the memory management module 12 allocates the amount of memory 16 available to each of the software applications 14 for storing data, and implements memory retention policies to free needed memory. The memory management module 12 maintains memory allocation and retention data for the software applications 14 to control the amount of memory 16 that each software application 14 may utilize (see, e.g., Fig. 2). The amount of memory 16 allocated to each software application 14 may be configured by the memory management module 12 when the software applications 14 are installed to the mobile device 10, and may preferably be modified by a device user via the user interface 20. If additional memory is needed by a particular software application 14, then the memory management module 12 may allocate additional memory (i.e., free memory), if available, or may attempt to free additional memory by implementing the memory retention policies.

For example, if Application 1 requires additional memory to store data, then the memory management module 12 may first determine if any free memory is available for allocation to Application 1. Free memory may either be allocated automatically by the memory management module 12 or may be allocated with permission from the device user. If no free memory is available, then the memory management module 12 may attempt to "clean up" the memory segment allocated to Application 1 or may reallocate memory from one or more of the memory segments allocated to Applications 2-N in accordance with the memory retention policies.

Fig. 2 illustrates an example memory allocation and retention table 30 for use with the memory management system of Fig. 1. The table 30 includes memory allocation data 32-34 and memory retention data 36-38 for each software application 40-43. The memory allocation data 32-34 identifies a minimum memory allocation 32, a maximum memory allocation 33 and a memory threshold 34 for each of the software applications 40-43. The memory retention data 36-38 identifies a memory retention policy 36, a memory retention target 37 and a priority level 38 for each of the software applications 40-43.

With reference to the memory allocation data 32-34, the minimum memory allocation 32 identifies the minimum amount of memory that needs to be allocated to a particular software application 40-43 for proper operation. The maximum memory allocation 33 identifies the amount of memory currently allocated for a particular application 40-43. The memory threshold 34 represents the amount of available memory for each software application 40-43 that may be filled before executing the memory retention policies. Example memory allocation values 32-34 are illustrated in Fig. 2 for a browser application, a game application 41, an email application 42, and an address book application 43. For instance, the example browser application 40 has a minimum memory allocation of .025T, a maximum memory allocation of 25T and a memory threshold of .1875T, where T is the total available memory. Illustrated in parentheses are example memory allocation values 32-34 for a mobile device having a 4 megabyte memory device.

With reference to the memory retention data 36-38, the memory retention policy 36 identifies the memory retention algorithm used for deleting stored data for a particular software application 40-43 to free additional memory. Example memory retention policies 36 are least-recently-used (LRU), largest file size, first-in-first-out (FIFO), and never delete. The memory retention target 37 identifies an amount of filled memory that the memory management module 12 will attempt to achieve for a particular software application 40-43 by implementing the memory retention policy 36. For instance, in the illustrated example, if the memory management module 12 applies a LRU memory retention policy 36 to Application 1, then the stored data that has been accessed the least (i.e., the least-recently-used data) will be deleted until 125T bytes of data remain in the memory segment 16 allocated to Application 1.

The memory retention priority 38 may be used by the memory management module 12 to select which memory segments should be given the highest priority for memory retention purposes. For example, if additional memory is needed for one of the software applications 40-43 (and no free memory is available), then the memory management module 12 may first apply the designated memory retention policy 36 to the software application memory segment having the lowest priority 38. For instance, in the illustrated example, if any of the software applications 40-43 require additional memory, then the memory management module 12 may first attempt to free the needed memory by applying the designated memory retention policy 36 (largest file size) to Application 2 (the game application), which has the lowest memory retention priority.

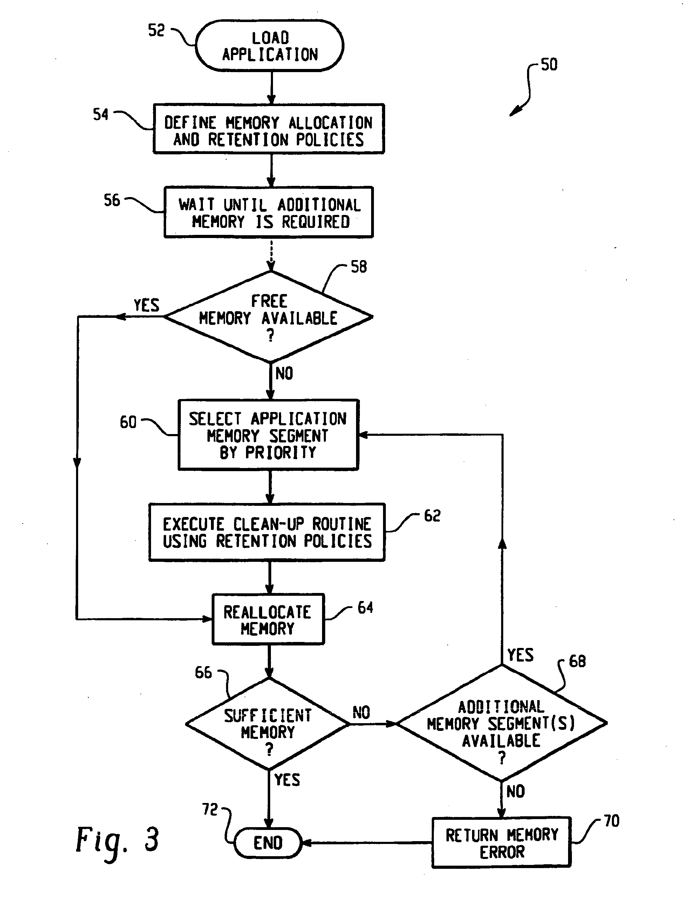

Fig. 3 is a flow diagram illustrating an example memory management method for a mobile device. At step 52, a new software application is loaded onto the mobile device. Memory allocation and retention policies are then defined for the new software application at step 54. Preferably, the memory allocation and retention policies are defined automatically upon loading the software application. In other cases, however, the memory allocation and retention policies may be defined by a device user.

After the software application is loaded and its memory allocation and retention policies are defined, the method 50 proceeds to step 56. The method 50 remains at step 56 during normal device operation, unless additional memory is needed by the software application. If additional memory is needed, then the method 50 proceeds to decision step 58. At step 58, the method 50 determines if free memory is available for allocation to the software application. If free memory is available, then the method skips to step 64 to reallocate the needed free memory. Else, if no free memory is available, then the method attempts to free additional memory at steps 60 and 62.

At step 60, an application memory segment is selected according to an application priority hierarchy, as described above with reference to Fig. 2. Then, at step 62 a memory retention policy (e.g., LRU, largest file size, FIFO, etc.) is applied to the selected application memory segment to free additional memory. The memory retention policy may be different for each software application. For example, the method may execute a subroutine to identify memory retention parameters specific to a particular software application. An example system and method for identifying and applying a memory retention policy specific to a particular software application is described in the co-owned International Patent Application No. PCT/CA03/01104, entitled "Data Store Management System And Method For Wireless Devices". Once the memory retention policy has been implemented, then the memory is reallocated at step 64.

At step 66, the method determines if sufficient memory has been reallocated to the software application. If so, then the method 50 ends at step 72. Else, if additional memory is needed, then the method proceeds to step 68. At step 68, the method 50 determines if there are any additional software memory segments available to free additional memory. If so, then the method returns to step 60 to select one of the additional software memory segments according to the application priority hierarchy. If no additional memory segments are available, however, then the method returns an error message at step 70 and ends at step 72.

Fig. 4 is a block diagram illustrating an example mobile communication device 2100. The mobile communication device 2100 includes a processing subsystem 2138, a communications subsystem 2111, a short-range communications subsystem 2140, a memory subsystem 2124, 2126, and various other device subsystems and/or software modules 2142. The mobile communication device 2100 also includes a user interface, which may include a display 2122, a serial port 2130, a keyboard 2132, a speaker 2134, a microphone 2136, one or more auxiliary input/output devices 2128, and/or other user interface devices.

The processing subsystem 2138 controls the overall operation of the mobile communication device 2100. Operating system software executed by the processing subsystem 2138 may be stored in a persistent store, such as a flash memory 2124, but may also be stored in other types of memory devices in the memory subsystem, such as a read only memory (ROM) or similar storage element. In addition, system software, specific device applications, or parts thereof, may be temporarily loaded into a volatile store, such as a random access memory (RAM) 2126. Communication signals received by the mobile communication device 2100 may also be stored to RAM 2126.

The processing subsystem 2138, in addition to its operating system functions, enables execution of software applications 2124 on the device 2100. A predetermined set of applications that control basic device operations, such as data and voice communications, may be installed on the device 2100 during manufacture. A personal information manager (PIM) application, including an electronic messaging application, may be installed on the device. The PIM may, for example, be operable to organize and manage data items, such as email, calendar events, voice mails, appointments, and task items. The PIM application may also be operable to send and receive data items via the wireless network 2119. In addition, the memory management module 2124C and application data storage location 16, as described above, may also me included in the flash memory 2124.

Communication functions, including data and voice communications, are performed through the communication subsystem 2111, and possibly through the short-range communications subsystem 2140. The communication subsystem 2111 includes a receiver 2112, a transmitter 2114 and one or more antennas 2116, 2118. In addition, the communication subsystem 2111 also includes a processing module, such as a digital signal processor (DSP) 2120 or other processing device(s), and local oscillators (LOs) 2113. The specific design and implementation of the communication subsystem 2111 is dependent upon the communication network in which the mobile communication device 2100 is intended to operate. For example, a mobile communication device 2100 may include a communication subsystem 2111 designed to operate within the Mobitex™ mobile communication system, the DataTAC™ mobile communication system, a GSM network, a GPRS network, a UMTS network, and/or an EDGE network.

Network access requirements vary depending upon the type of communication system. For example, in the Mobitex and DataTAC networks, mobile communication devices are registered on the network using a unique personal identification number or PIN associated with each device. In UMTS and GSM/GPRS networks, however, network access is associated with a subscriber or user of a device. A GPRS device therefore requires a subscriber identity module, commonly referred to as a SIM card, in order to operate on a GSM/GPRS network.

When required network registration or activation procedures have been completed, the mobile communication device 2100 may send and receive communication signals over the communication network 2119. Signals received by the antenna 2116 from the communication network 21 19 are routed to the receiver 2112, which provides signal amplification, frequency down conversion, filtering, channel selection, etc., and may also provide analog to digital conversion. Analog-to-digital conversion of the received signal allows the DSP to perform more complex communication functions, such as demodulation and decoding. In a similar manner, signals to be transmitted to the network 2119 are processed (e.g., modulated and encoded) by the DSP 2120 and are then provided to the transmitter 2114 for digital to analog conversion, frequency up conversion, filtering, amplification and transmission to the communication network 2119 (or networks) via the antenna 2118.

In addition to processing communication signals, the DSP 2120 provides for receiver 2112 and transmitter 2114 control. For example, gains applied to communication signals in the receiver 2112 and transmitter 2114 may be adaptively controlled through automatic gain control algorithms implemented in the DSP 2120.

In a data communication mode, a received signal, such as a text message or web page download, is processed by the communication subsystem 2111 and input to the processing device 2138. The received signal is then further processed by the processing device 2138 for output to a display 2122, or alternatively to some other auxiliary I/O device 2128. A device user may also compose data items, such as email messages, using a keyboard 2138 and/or some other auxiliary I/O device 2128, such as a touchpad, a rocker switch, a thumb-wheel, or some other type of input device. The composed data items may then be transmitted over the communication network 2119 via the communication subsystem 2111.

In a voice communication mode, overall operation of the device is substantially similar to the data communication mode, except that received signals are output to a speaker 2134, and signals for transmission are generated by a microphone 2136. Alternative voice or audio I/O subsystems, such as a voice message recording subsystem, may also be implemented on the device 2100. In addition, the display 2122 may also be utilized in voice communication mode, for example to display the identity of a calling party, the duration of a voice call, or other voice call related information.

The short-range communications subsystem 2140 enables communication between the mobile communication device 2100 and other proximate systems or devices, which need not necessarily be similar devices. For examples the short-range communications subsystem 2140 may include an infrared device and associated circuits and components, or a Bluetooth™ communication module to provide for communication with similarly-enabled systems and devices.

This written description uses examples to disclose the invention, including the best mode, and also to enable a person skilled in the art to make and use the invention.

In particular, the invention covers the following aspects:
1. A mobile device, comprising:
   a memory subsystem;
   a processing subsystem coupled to the memory subsystem and operable to store and retrieve data in the memory subsystem and to execute instructions stored in the memory subsystem; and
   a memory management module stored in the memory subsystem and executed by the processing subsystem and comprising instructions operable to cause the mobile device to allocate a maximum amount of available data storage memory in the memory subsystem for storing data for each of a plurality of software applications loaded on the mobile device;
   the memory management module being further operable to automatically detect that additional data storage memory is needed for an executing software application, select one of the plurality of software applications for memory clean-up, and delete data from the data storage memory allocated to the selected software application in accordance with a pre-established memory retention policy for the selected software application.
2. The mobile device of aspect 1, wherein the memory management module is further operable to decrease the maximum amount of available data storage memory for the selected software application and proportionally increase the maximum amount of available memory for the executing application.
3. The mobile device according to one of the aspects 1 to 2, further comprising:
   a memory allocation and retention table stored in the memory subsystem and maintained by the memory management module, the memory allocation and retention table identifying the maximum amount of available storage memory for each of the plurality of software applications.
4. The mobile device of aspect 3, wherein the memory allocation and retention table identifies the memory retention policy for the selected software application.
5. The mobile device of aspect 4, wherein the memory allocation and retention table identifies a memory retention policy for each of the plurality of software applications.
6. The mobile device according to one of the aspects 1 to 5, wherein the memory management module is further operable to allocate a minimum amount of available data storage memory in the memory subsystem for storing data for each of the plurality of software application;
   wherein the memory management module prevents the maximum amount of available memory for each of the plurality of software applications from being decreased below the allocated minimum amount of available data storage memory.
7. The mobile device according to one of the aspects 1 to 6, wherein the memory management module automatically detects that additional data storage memory is needed for an executing software application by determining that an amount of stored data in the data storage memory for the executing software application has reached a pre-established memory threshold value for the executing software application..
8. The mobile device according to one of the aspects 1 to 7, wherein the memory management module selected one of the software applications for memory clean-up according a pre-established priority level of the selected software application.
9. A method of managing memory in a mobile device, comprising:
   allocating a maximum amount of available data storage memory for each of a plurality of software applications loaded on the mobile device;
   automatically detecting that additional memory is needed for an executing software application;
   selecting one of the software applications for memory clean-up;
   deleting data from the data storage memory allocated to the selected software application in accordance with a pre-established memory retention policy for the selected software application; and
   if the selected software application is different than the executing software application, then decreasing the maximum amount of available memory for the selected software application and proportionally increasing the maximum amount of available memory for the executing software application.
10. The method of aspect 9, further comprising:
   allocating a minimum amount of data storage memory for each of the plurality of software applications loaded on the mobile device; and
   preventing the maximum amount of available memory for the selected software application from being decreased below the allocated minimum amount of data storage memory for the selected software application.
11. The method according to one of the aspects 9 to 10, further comprising:
   establishing a memory threshold value for the executing software application; and
   automatically detecting that additional memory is needed for the executing application by detecting that an amount of stored data in the data storage memory for the executing software application has reached the memory threshold value.
12. The method according to one of the aspects 9 to 11, wherein the software application selected for memory clean-up is selected according to a priority level.
13. The method according to one of the aspects 9 to 12, further comprising:
   determining a memory retention target for the selected software application; and
   deleting data from the data storage memory allocated to the selected application until an amount of data remaining in the data storage memory location is at or below the memory retention target.
14. The method according to one of the aspects 9 to 13, further comprising:
   determining if sufficient memory is available for the executing application;
   if sufficient memory is not available for the executing application, then selecting another of the software applications for memory clean-up.
15. A mobile device, comprising:
   a memory subsystem for storing data from a plurality of software applications;
   means for allocating a maximum amount of memory in the memory subsystem available to store date from each of the plurality of software applications;
   means for automatically detecting that additional memory is needed for an executing software application;
   means for selecting one of the plurality of software applications;
   means for deleting data from the memory allocated to the selected software application in accordance with a pre-established memory retention policy; and
   means for decreasing the maximum amount of memory allocated to the selected software application and proportionally increasing the maximum amount of available memory for the executing software application.

## Claims

1. A mobile device (10), comprising:
a memory subsystem;
a processing subsystem coupled to the memory subsystem and operable to store and retrieve data In the memory subsystem and to execute instructions stored in the memory subsystem;
a memory management module (12) stored in the memory subsystem and executed by the processing subsystem; and
memory allocation data (30) stored in the memory subsystem and maintained by the memory management module (12), the memory allocation data (30) identifying for each of a plurality of software applications (14) loaded on the mobile device (10):
a memory retention policy (36);
a maximum memory allocation (33) identifying the amount of memory allocated in the memory subsystem;
a memory threshold (34) which represents the amount of memory in the memory subsystem that may be filled before allocating additional memory;
a memory retention target (37) identifying an amount of filled memory that will remain after memory clean-up; and
a minimum memory allocation (32) identifying the minimum amount of memory that needs to be allocated in the memory subsystem for proper operation;
the memory management module (12) being operable to automatically
cause the mobile device (10) to allocate the maximum memory allocation (33) to each of the plurality of software applications (14);
detect that additional memory is needed for an executing software application (14) by determining that an amount of filled memory has reached the memory threshold (34) for the executing software application (14);
select an application (14) of the plurality of software applications (14);
delete data from memory from the selected software application (14), in accordance with the memory retention policy (36), until the memory retention target (37) for the selected software application (14) remains;
reallocate memory from the selected software application (14) to the executing software application (14); and
prevent the maximum memory allocation (33) for the selected software application (14) from being decreased below its minimum memory allocation (32).

2. The mobile device (10) of claim 1, wherein the mobile device (10) further comprises memory retention data (30) which identifies for each of the plurality of software applications (14) loaded on the mobile device (10) a memory retention priority (38) indicating which priority it has for memory retention purposes; and wherein the memory management module (12) is operable to automatically select an application (14) of the plurality of software applications (14) according to the memory retention priority(38).

3. The mobile device (10) of claim 1 or 2, wherein the memory allocation data (30) and/or memory retention data (30) is defined automatically upon loading of a software application (14) to the mobile device (10).

4. The mobile device (10) of claims 1 to 3, wherein the memory allocation data (30) and/or memory retention data (30) is stored in a table (30),

5. The mobile-device (10) of claims 1 to 4, wherein the memory management module (12) configures the maximum memory allocation (33) of a software application (14) when the software application (14) is installed to the mobile device (10).

6. The mobile device (10) of claims 1 to 5, wherein the memory management module (12) is a software application executed by a virtual machine (18) installed on the mobile device (10).

7. A method of managing memory in a mobile device (10), comprising:
storing and retrieving data in a memory subsystem and executing instructions stored in the memory subsystem;
maintaining a memory allocation data (30) identifying for each of a plurality of software applications:
a memory retention policy (36);
a maximum memory allocation (33) identifying the amount of memory allocated in the memory subsystem;
a memory threshold (34) which represents the amount of memory in the memory subsystem that may be filled before allocating additional memory;
a memory retention target (37) Identifying an amount of flitted memory that will remain after memory clean-up; and
a minimum memory allocation (32) identifying the minimum amount of memory that needs to be allocated in the memory subsystem for proper operation;
automatically allocating the maximum memory allocation (33) to each of the plurality of software applications (14) loaded on the mobile device (10);
detecting that additional memory is needed for an executing software application (14) by determining that an amount of filled memory has reached the memory threshold (34) for the executing software application (14);
selecting an application (14) of the plurality of the software applications (14);
deleting data from memory from the selected software application (14), in accordance with the memory retention policy (36), until the memory retention target (37) for the selected software application (14) remains;
reallocating memory from the selected software application (14) to the executing software application (14); and
preventing the maximum memory allocation (33) of the selected software application (14) from being decreased below the minimum memory allocation (32) of the selected software application (14).

8. The method according to claim 7, further comprising:
prior to selecting a software application (14), determining if free memory is available for the executing application (14); and
if free memory is available for the executing application (14), then automatically allocating the free memory to the executing application (14).

## Patentansprüche

1. Mobile Vorrichtung (10), die aufweist:
ein Speicherteilsystem;
ein Verarbeitungsteilsystem, das mit dem Speicherteilsystem verbunden ist und betriebsfähig ist, Daten in dem Speicherteilsystem zu speichern und
daraus abzurufen und Anweisungen auszuführen, die in dem Speicherteilsystem gespeichert sind;
ein Speicherverwaltungsmodul (12), das in dem Speicherteilsystem gespeichert ist und durch das Verarbeitungsteilsystem ausgeführt wird; und
Speicherzuteilungsdaten (30), die in dem Speicherteilsystem gespeichert sind und durch das Speicherverwaltungsmodul (12) geführt werden, wobei die Speicherzuteilungsdaten (30) für jede einer Vielzahl von Softwareanwendungen (14), die auf der mobilen Vorrichtung (10) geladen sind, identifizieren:
eine Speicherretentionsrichtlinie (36);
eine maximale Speicherzuteilung (33), die die Menge von Speicher identifiziert, die in dem Speicherteilsystem zugeteilt ist;
eine Speicherschwelle (34), die die Menge von Speicher in dem Speicherteilsystem repräsentiert, die gefüllt werden kann vor einem Zuteilen von zusätzlichem Speicher;
ein Speicherretentionsziel (37), das eine Menge von gefülltem Speicher identifiziert, die nach einer Speicherbereinigung verbleibt; und
eine Minimum-Speicherzuteilung (32), die die Minimum-Menge von Speicher identifiziert, die in dem Speicherteilsystem zugeteilt werden muss für einen ordnungsgemäßen Betrieb;
wobei das Speicherverwaltungsmodul (12) betriebsfähig ist, automatisch
die mobile Vorrichtung (10) zu veranlassen, die maximale Speicherzuteilung (33) jeder der Vielzahl von Softwareanwendungen (14) zuzuteilen;
zu erfassen, dass zusätzlicher Speicher erforderlich ist für eine ausführende Softwareanwendung (14), durch Bestimmen, dass eine Menge von gefülltem Speicher die Speicherschwelle (34) erreicht hat für die ausführende Softwareanwendung (14);
eine Anwendung (14) der Vielzahl von Softwareanwendungen (14) auszuwählen;
Daten aus dem Speicher von der ausgewählten Softwareanwendung (14) zu löschen, in Übereinstimmung mit der Speicherretentionsrichtlinie (36), bis das Speicherretentionsziel (37) für die ausgewählte Softwareanwendung (14) verbleibt;
Speicher von der ausgewählten Softwareanwendung (14) an die ausführende Softwareanwendung (14) neu zuzuteilen; und
zu verhindern, dass die maximale Speicherzuteilung (33) für die ausgewählte Softwareanwendung (14) verringert wird unter ihre Minimum-Speicherzuteilung (32).

2. Mobile Vorrichtung (10) gemäß Anspruch 1, wobei die mobile Vorrichtung (10) weiter Speicherretentionsdaten (30) aufweist, die für jede der Vielzahl von Softwareanwendungen (14), die auf der mobilen Vorrichtung (10) geladen sind, eine Speicherretentionspriorität (38) identifiziert, die anzeigt, welche Priorität sie hat für Speicherretentionszwecke; und wobei das Speicherverwaltungsmodul (12) betriebsfähig ist, automatisch eine Anwendung (14) der Vielzahl von Softwareanwendungen (14) entsprechend der Speicherretentionspriorität (38) auszuwählen.

3. Mobile Vorrichtung (10) gemäß Anspruch 1 oder 2, wobei die Speicherzuteilungsdaten (30) und/oder die Speicherretentionsdaten (30) automatisch bei einem Laden einer Softwareanwendung (14) auf die mobile Vorrichtung (10) definiert werden.

4. Mobile Vorrichtung (10) gemäß den Ansprüchen 1 bis 3, wobei die Speicherzuteilungsdaten (30) und/oder die Speicherretentionsdaten (30) in einer Tabelle (30) gespeichert sind.

5. Mobile Vorrichtung (10) gemäß den Ansprüchen 1 bis 4, wobei das Speicherverwaltungsmodul (12) die maximale Speicherzuteilung (33) einer Softwareanwendung (14) konfiguriert, wenn die Softwareanwendung (14) auf der mobilen Vorrichtung (10) installiert wird.

6. Mobile Vorrichtung (10) gemäß den Ansprüchen 1 bis 5, wobei das Speicherverwaltungsmodul (12) eine Softwareanwendung ist, die durch eine virtuelle Maschine (18) ausgeführt wird, die auf der mobilen Vorrichtung (10) installiert ist.

7. Verfahren zum Verwalten von Speicher in einer mobilen Vorrichtung (10), das aufweist:
Speichern von Daten in einem Speicherteilsystem und daraus Abrufen und Ausführen von Anweisungen, die in dem Speicherteilsystem gespeichert sind;
Führen von Speicherzuteilungsdaten (30), die für jede einer Vielzahl von Softwareanwendungen identifizieren:
eine Speicherretentionsrichtlinie (36);
eine maximale Speicherzuteilung (33), die die Menge von Speicher identifiziert, die in dem Speicherteilsystem zugeteilt ist;
eine Speicherschwelle (34), die die Menge von Speicher in dem Speicherteilsystem repräsentiert, die gefüllt werden kann vor einem Zuteilen von zusätzlichem Speicher;
ein Speicherretentionsziel (37), das eine Menge von gefülltem Speicher identifiziert, die nach einer Speicherbereinigung verbleibt; und
eine Minimum-Speicherzuteilung (32), die die Minimum-Menge von Speicher identifiziert, die in dem Speicherteilsystem zugeteilt werden muss für einen ordnungsgemäßen Betrieb;
automatisches Zuteilen der maximalen Speicherzuteilung (33) zu jeder der Vielzahl von Softwareanwendungen (14), die auf der mobilen Vorrichtung (10) geladen sind;
Erfassen, dass zusätzlicher Speicher erforderlich ist für eine ausführende Softwareanwendung (14), durch Bestimmen, dass eine Menge von gefülltem Speicher die Speicherschwelle (34) erreicht hat für die ausführende Softwareanwendung (14);
Auswählen einer Anwendung (14) der Vielzahl von Softwareanwendungen (14);
Löschen von Daten von dem Speicher aus der ausgewählten Softwareanwendung (14), in Übereinstimmung mit der Speicherretentionsrichtlinie (36), bis das Speicherretentionsziel (37) für die ausgewählte Softwareanwendung (14) verbleibt;
Neuzuteilen von Speicher von der ausgewählten Softwareanwendung (14) an die ausführende Softwareanwendung (14); und
Verhindern, dass die maximale Speicherzuteilung (33) der ausgewählten Softwareanwendung (14) verringert wird unter die Minimum-Speicherzuteilung (32) der ausgewählten Softwareanwendung (14).

8. Verfahren gemäß Anspruch 7, das weiter aufweist:
vor dem Auswählen einer Softwareanwendung (14), Bestimmen, ob freier Speicher für die ausführende Anwendung (14) verfügbar ist; und
wenn freier Speicher für die ausführende Anwendung (14) verfügbar ist, dann automatisches Zuteilen des freien Speichers zu der ausführenden Anwendung (14).

## Revendications

1. Dispositif mobile (10), comprenant :
un sous-système de mémoire ;
un sous-système de traitement relié au sous-système de mémoire et ayant pour fonction de stocker et d'extraire des données contenues dans le sous-système de mémoire et d'exécuter des instructions stockées dans le sous-système de mémoire ;
un module de gestion de mémoire (12) stocké dans le sous-système de mémoire et exécuté par le sous-système de traitement ; et
des données d'allocation de mémoire (30) stockées dans le sous-système de mémoire et maintenues à jour par le module de gestion de mémoire (12), les données d'allocation de mémoire (30) identifiant, pour chacune d'une pluralité d'applications logicielles (14) chargées sur le dispositif mobile (10) :
une règle de rétention en mémoire (36) ;
une allocation de mémoire maximale (33) identifiant la quantité de mémoire allouée dans le sous-système de mémoire ;
un seuil de mémoire (34) qui représente la quantité de mémoire dans le sous-système de mémoire qui peut être remplie avant d'allouer de la mémoire supplémentaire ;
une cible de rétention en mémoire (37) identifiant une quantité de mémoire remplie qui subsistera après un nettoyage de la mémoire ; et
une allocation de mémoire minimale (32) identifiant la quantité minimale de mémoire qu'il est nécessaire d'allouer dans le sous-système de mémoire pour un fonctionnement correct ;
le module de gestion de mémoire (12) ayant pour fonction, automatiquement :
d'amener le dispositif mobile (10) à allouer l'allocation de mémoire maximale (33) à chacune de la pluralité d'applications logicielles (14) ;
de détecter le fait que de la mémoire supplémentaire est nécessaire pour exécuter une application logicielle (14) en déterminant qu'une quantité de mémoire remplie a atteint le seuil de mémoire (34) pour l'application logicielle (14) en cours d'exécution ;
de sélectionner une application (14) parmi la pluralité d'applications logicielles (14) ;
d'effacer des données de la mémoire depuis l'application logicielle (14) sélectionnée, conformément à la règle de rétention en mémoire (36), jusqu'à ce que la cible de rétention en mémoire (37) destinée à l'application logicielle (14) sélectionnée subsiste ;
de réallouer de la mémoire depuis l'application logicielle (14) pour l'application logicielle (14) en cours d'exécution ; et
d'empêcher que l'allocation de mémoire maximale (33) destinée à l'application logicielle (14) sélectionnée soit réduite en dessous de son allocation de mémoire minimale (32).

2. Dispositif mobile (10) selon la revendication 1, ledit dispositif mobile (10) comprenant en outre des données de rétention en mémoire (30) qui identifient, pour chacune de la pluralité d'applications logicielles (14) chargées sur le dispositif mobile (10), une priorité de rétention en mémoire (38) indiquant la priorité dont il dispose à des fins de rétention en mémoire ; et dans lequel le module de gestion de mémoire (12) a pour fonction de sélectionner automatiquement une application (14) parmi la pluralité d'applications logicielles (14) conformément à la priorité de rétention en mémoire (38).

3. Dispositif mobile (10) selon la revendication 1 ou 2, dans lequel les données d'allocation de mémoire (30) et/ou les données de rétention en mémoire (30) sont définies automatiquement lors du chargement d'une application logicielle (14) dans le dispositif mobile (10).

4. Dispositif mobile (10) selon les revendications 1 à 3, dans lequel les données d'allocation de mémoire (30) et/ou les données de rétention en mémoire (30) sont stockées dans une table (30).

5. Dispositif mobile (10) selon les revendications 1 à 4, dans lequel le module de gestion de mémoire (12) configure l'allocation de mémoire maximale (33) d'une application logicielle (14) lorsque l'application logicielle (14) est installée sur le dispositif mobile (10).

6. Dispositif mobile (10) selon les revendications 1 à 5, dans lequel le module de gestion de mémoire (12) est une application logicielle exécutée par une machine virtuelle (18) installée sur le dispositif mobile (10).

7. Procédé de gestion de la mémoire dans un dispositif mobile (10), consistant à :
stocker et extraire des données dans un sous-système de mémoire et exécuter des instructions stockées dans le sous-système de mémoire,
maintenir à jour des données d'allocation de mémoire (30) identifiant, pour chacune d'une pluralité d'applications logicielles :
une règle de rétention en mémoire (36) ;
une allocation de mémoire maximale (33) identifiant la quantité de mémoire allouée dans le sous-système de mémoire ;
un seuil de mémoire (34) qui représente la quantité de mémoire dans le sous-système de mémoire qui peut être remplie avant d'allouer de la mémoire supplémentaire ;
une cible de rétention en mémoire (37) identifiant une quantité de mémoire remplie qui subsistera après un nettoyage de la mémoire ; et
une allocation de mémoire minimale (32) identifiant la quantité minimale de mémoire qu'il est nécessaire d'allouer dans le sous-système de mémoire pour un fonctionnement correct ;
allouer automatiquement l'allocation de mémoire maximale (33) à chacune de la pluralité d'applications logicielles (14) chargées sur le dispositif mobile (10) ;
détecter que de la mémoire supplémentaire est nécessaire pour une application logicielle (14) en cours d'exécution en déterminant qu'une quantité de mémoire remplie a atteint le seuil de mémoire (34) pour l'application logicielle (14) en cours d'exécution ;
sélectionner une application (14) parmi la pluralité des applications logicielles (14) ;
effacer des données de la mémoire depuis l'application logicielle (14) sélectionnée, conformément à la règle de rétention en mémoire (36), jusqu'à ce que la cible de rétention en mémoire (37) destinée à l'application logicielle (14) sélectionnée subsiste ;
réallouer de la mémoire depuis l'application logicielle (14) sélectionnée à l'application logicielle (14) en cours d'exécution ; et
empêcher que l'allocation de mémoire maximale (33) de l'application logicielle sélectionnée (14) soit réduite en dessous de l'allocation de mémoire minimale (32) de l'application logicielle (14) sélectionnée.

8. Procédé selon la revendication 7, consistant en outre à :
avant de sélectionner une application logicielle (14), déterminer si de la mémoire libre est disponible pour l'application (14) en cours d'exécution ; et
si de la mémoire libre est disponible pour l'application (14) en cours d'exécution, allouer alors automatiquement la mémoire libre à l'application (14) en cours d'exécution.
